# EUROPEAN PATENT SPECIFICATION

(11) **EP 1 297 502 B1**
(45) Date of publication and mention of the grant of the patent: **12.09.2007**
(21) Application number: 00944237.7
(22) Date of filing: 04.07.2000
(51) Int. Cl.: G07F 7/10

(54) **PROCESS TO CARRY OUT ON-LINE PURCHASING TRANSACTIONS**
VERFAHREN ZUR DURCHFÜHRUNG VON ONLINE KAUFTRANSAKTIONEN
PROCEDE D'EXECUTION DE TRANSACTIONS D'ACHAT EN LIGNE

(43) Date of publication of application: 02.04.2003
(73) Proprietor: SIPO S.R.L., 20129 Milano (IT)
(72) Inventor: PICCHI, Angelo, I-20129 Milano (IT)
(74) Representative: Cioni, Carlo
(86) International application number: PCT/IT2000/000277
(87) International publication number: WO 2002/003339

(56) References cited:
- WO-A-98/09260
- US-A- 5 742 845
- US-A- 5 883 810
- US-A- 5 909 023

## Description

### Field of application

The invention is directed to utilise a debit or credit card as long as supplied with a Personal Identification Number (PIN) (hereinafter referred to as bancomat), to make sure off line payments bind with on-line Internet purchasing transactions avoiding any disclosure of information relating to the card itself during on line transaction.

### Background of the invention

Different types of credit cards are used nationally and internationally on an ever-increasing scale. These are used instead of cash, cheques or traveller cheques. There is also an increasing widespread use of Personal Computers connected to an International network (hereinafter referred to as "Internet") that allows purchasing transactions by selecting the goods or services of interest and placing the order by providing the seller (hereinafter referred to as "**e-commerce**") with the credit card number and the identity of the credit card owner. In a typical **e-commerce** transaction, a customer, by using his personal computer, accesses, through a wired or unwired (WAP) connection, a merchant's Internet web and places an order for goods or services paying by credit card, with the consequence to be obliged to provide his own identity and his credit card numbers. To carry out the order, the merchant's web site requests, and generally receives, an authorisation from the customer's card issuing company. Once the **e-commerce** has received the above authorisation, the fulfilment procedure for delivering goods or rendering services starts.

Unfortunately with the convenience of using said credit cards comes also the inconvenient that the data of the identity of the owner and his credit card number flow through a public network (Internet), with the consequence that hackers have the possibility to get all data and make on-line purchasing debiting through stolen credit card's numbers the account of the victim until discovery. This one is depressing e-commerce purchases increase, at least in Italy.

Many attempts have been proposed to prevent the misuse of credit cards by unauthorised persons. Most of the proposals to make safer electronic money transactions in internet deal with an increase of the secret codes, number and/or complexity. Actual safety system cannot assure total prevent from hacker's intrusion, with the consequence that the idea of carrying out transaction on line with credit cards has not much appeal. Microchips cards which can encrypt data bind sophisticated electronic equipment are already in commerce, but purchaser are obliged to spend money for new credit card and equipment, so their diffusion increases slowly.

Biggest problem associated with the actual way to carry out on line purchases deal with the flow of information regarding sensitive money data through public network subject to hacker's discovery and consequent misuse.

US 5.742.845 faces the problem with a system including an open network linked with a plurality of standard I/O devices, such as Personal Computer or the like, and a plurality of non-standard I/O devices, such as credit cards terminal and so on, and with a server on which is installed a processing system to communicate with said devices.

The system further includes an extended protocol to consent to said server to communicate with the said non-standard I/O devices and a bank processing program, resident in the PC terminal, along with a client program to navigate within the open network.

Such a system is used to execute transactions between a consumer and a merchant, wherein the consumer initiates a transaction with the client program and orders goods or services from a merchant, receives from the merchant its account number, then passes control to bank processing program to use a more secure link, supported by PIN, through said non-standard I/O devices, for paying the selected goods or services by crediting said account number.

The bank processing program executes the funds transaction between the consumer and the merchant and sends to the merchant remittance information in a timely manner: hence, returns control to the client program for further purposes.

The disadvantages of such a system include the need of an extended protocol and costly programs and devices to be owned by the consumer and a lot of risks, in terms of security, connected with the usually low degree of protection of the point of connection between the consumer's terminal and the open network.

Said risks continue to survive because there is the possibility for a hacker to intercept communications exchanged on said secure link accessing said link through the public open network.

WO 98/09260 refers to a method and a system for automatically conducting a financial transaction between a user and a trader. According to said system the user terminal transmit user information and billing information to a service provider (the Bank) over a communication network which may be a publicly available fixed network, such as a PSTN, or a cellular network, or the Internet.

It is to be noted that all said communication systems can be, more or less easily, intercepted.

### Summary of the invention

The present invention is directed to eliminate all above inconvenients and provide a safe procedure which may consent to make off line payments for on line purchases using existing debit or credit card, as long as supplied with Personal Identification Number (PIN), typically bankey card, bancomat and, for instance, some other credit cards managed by Visa, Maestro, Cirrus etc. etc., (hereinafter referred to as bancomat), avoiding any disclosure of information relating to the card itself.

The procedure developed according to the present invention does not involve any money sensitive information transfer through a public network notwithstanding most part of transaction takes place through Internet or other public networks.

This way of proceeding is made possible by the help of a new organisation, hereinafter referred to as IM, operating in a intermediate position between the **e-commerce** trading companies and the secure network available for the bank system only (hereinafter referred to as SSB in accordance with the name of the Italian secure transaction service company). Said new IM organisation shall collect the basic data of the **e-commerce** operating companies interested in the new trading procedure according to the invention. All such **e-commerce** companies will be affiliated to IM organisation. The above data relating to the affiliated **e-commerce** companies - typically IP address of the web, complete name of the company which owns the business on the web, its complete bank account's code, will be entered into a data base managed by IM and made available to SSB only through private secure net (extranet).

IM shall create a specific software to carry out on line transactions of the affiliated **e-commerce** company subject to bancomat payment.

### Description of invention

According to the procedure of the present invention a Purchaser will select, within an **e-commerce** web of an affiliated company, the goods or services of its own interest and he will also request to pay later using bancomat. As a consequence of its selection, Purchaser will receive from the **e-commerce** web a display communication consisting of a **univocal code** relating to the purchasing operation (hereinafter transaction code), the amount of money involved, as well as the invitation to verify the IP address of the **e-commerce** web (for instance by simply exiting to dos and writing " PING WWW.name of the e commerce site") and make the payment within a certain period of time by using bancomat in an authorised Automatic Teller Machine (ATM). In the same time, in accordance with the software developed by IM, the **e-commerce** web will send to IM through a private secure net, other than Internet, (typically extranet) the transaction code, the amount of money involved and a code related to the country where the Purchaser lives. The above information, linked with the IP address of the site, shall be made available to proper SSB also.

According to another embodiment of the invention the displayed communication, including IP address of the site is confirmed by e-mail or SMS to the Purchaser notifying the details of the order and the deadline of payment. Failure to pay within the terms wills results in a cancellation of the order.

The payment of the orders, placed in an **e-commerce** web company by bancomat in a ATM terminal, implies the development by SSB of a software which enables the insertion of an additional option in the ATM menu similar to the existing option (in Italy) to recharge cellular telephones, or pay income taxes. Such option will request the Purchaser to select the option in the ATM, then digit in the ATM terminal keyboard the IP address of the web where the order has been placed, the transaction code and its bancomat PIN code.

SSB, operating in real time will immediately find, by searching in its database, fed in continuos by IM, the IP address and the transaction code and will indicate, on the ATM display, the amount of money to be paid (eventually after having checked the existence of such an amount of money in the Purchaser's bank account or any other authorisation relating to Internet purchasing, or to the unexpended balance for credit's card). If Purchaser is satisfied with the transaction's data showed on the ATM terminal display he will confirm the transaction by following the payment instructions appearing on the display, otherwise if he has changed his mind, he may still decide, in the very last moment, to refrain from confirming the order, simply by disregarding the invitation to confirm payment.

If the transaction is completed, then SSB will proceed essentially in the same way as in the conventional ATM transactions by debiting the account of the Purchaser and crediting the proper amount on the **e-commerce** account, well known for the link, through the master database of the affiliated **e-commerce** company provided by IM, with the IP address connected to the transaction. In this specification no mention is made of the intermediate parties compensation as IM, SSB, the Banks, in that such compensation is defined partly according to the conventional practice, partly with new agreements to sign. As it results from the above description, no sensitive electronic money information or data are transmitted through any public communication network like internet. The information exchanged through Internet between Purchaser and the **e-commerce** web is only pertaining to a purchasing order, subject to confirmation, the transaction code, the amount to be paid, country code of the purchaser and the choice to pay with bancomat. There are not any secret or valuable data that may be of any financial value for an unauthorised person who have gained access to the data. The secret and money sensitive data and information are transferred through secure network available for the bank system only (SSB).

### Best mode of invention embodiment

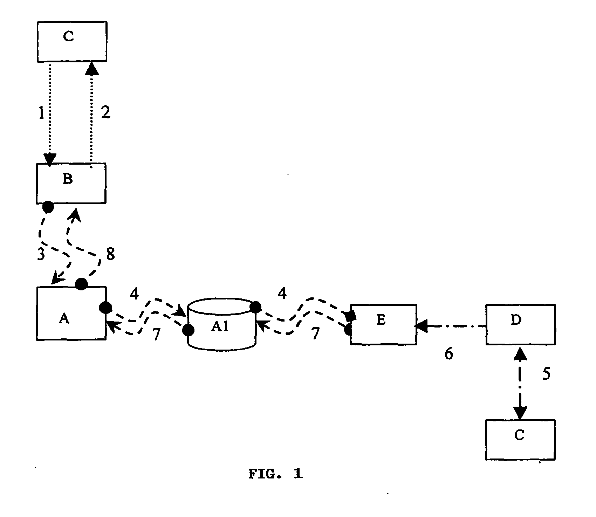

The attached drawing and the relevant description are given for a better understanding of the invention and the associated advantages over the prior art. The sole figure is a block diagram illustrating the process to perform electronic transactions according to the invention.

In the figure the entities involved in the transaction are represented by rectangular shaped block while cylindrical shape box are separated data base; in particular:
A is the intermediate entity IM
A1 are the databases organised and managed by IM
B is an IM affiliate **e-commerce** company,
C is the Purchaser using Internet to buy goods and/or services, and Bancomat to pay off line
D is an Automatic Teller Machine, ATM, with the option to pay Internet purchases
E is SSB, operating through a secure network available to the bank system only in the country where the purchaser lives.

Arrow lines indicate the data and information transmission line and direction.

The operations are as follows:

Purchaser C, having visited the **e-commerce** Web B affiliate to IM, decides to purchase some goods or services displayed in the web and in addition express his preference to pay through the procedure according the invention to gain safety in Bancomat payment procedure. Such a purchasing order and the payment selection are addressed from Purchaser to the **e-commerce** Web through internet line 1. The software developed by IM operating on the **e-commerce** web shall assure that the Purchaser display will receive, through Internet line 2, a communication including the transaction code relating to the purchasing operation, the confirmation of amount of money involved, and the IP address of the **e-commerce** web B as well as the invitation to pay the due amount for the purchasing transaction within a certain period of time by using an ATM authorised terminal and to check the web IP address simply by exiting dos and writing " PING WWW.name "of the **e-commerce** web.

Above information and data may be sent by e-mail and or sms, eventually avoiding to show them on the Purchaser display.

IM's software, running on **e-commerce** web's server, will now transfer to IM database, through private secure net (extranet) line 3, only the following data: transaction code, amount of payment due and country code of the Purchaser.

IM's software, operating on IM's server will link web's received data with web's IP address, then will transfer through private secure net (extranet) line 4, to an other IM's database's server the following data: IP address of the **e-commerce** web, transaction code, amount of payment due and country code of the Purchaser.

IM's software will create a database for each country code, then proper SSB's software will acquire in its own database from the IM's database's server (Al), through private secure net (extranet) line 4, IP address of the **e-commerce** web, transaction code and amount of payment due.

Within the expiring time of the order, the Purchaser will select the most convenient ATM with the option to pay internet purchases, then will insert his bancomat, will select the option to pay Internet purchases and will digit the IP address of the **e-commerce** web and the transaction code, already received on his display and/or by e-mail and/or by sms from **e-commerce** web, (line 5).

SSB, operating in real time will immediately find, by searching in its database, fed by A1, the IP address and the transaction code and will indicate, on the ATM display, the amount of money to be paid (line 5), the Purchaser, if satisfied with the transaction data showed on ATM's display, will enter his PIN; SSB's software, eventually after having checked the existence of such an amount of money in the Purchaser's bank account or any other authorisation relating to Internet purchasing, or the unexpended balance for credit's card, will ask the Purchaser to confirm the payment (line 5). The Purchaser shall still have the opportunity to refrain from confirming the order, simply by disregarding the invitation to pay.

If payment is confirmed, then SSB will proceed essentially in the same way as in the conventional ATM transactions (line 6) by debiting the bank account of the purchasing party and crediting the proper amount on the **e-commerce** web company's bank account, well known for the link , through the master database of the affiliated **e-commerce** company provided by IM, with the IP address connected to the transaction, and will also send through secure private network line 7 to IM's database server the following data: IP address of the **e-commerce** web to whom the payment has been done, transaction code and amount paid.

IM will acquire through private network line 7 from its database server the data and will transfer through secure private network line 8 to the **e-commerce** web the following data: transaction code, gross amount paid from the Purchaser, bank's commission and management data fees.

IM's software operating on **e-commerce** web server will provide to close the proper Purchaser's order and will start a fulfilment procedure for delivering goods or rendering services.

Data exchange from B to A and vice versa may be encrypted.

## Claims

1. Process to carry out on-line goods and/or services purchasing transactions, including the steps of utilising a PC terminal connected to a public network to exchange information and data with a merchant's web site of an e-commerce operating company, to select the goods and/or services to be purchased in said merchant's web site, to receive from said company a univocal code relating to said purchasing transaction, the amount of money involved, as well as an invitation to verify the IP address of the e-commerce web site and make payment within a certain period of time by using Bancomat in an ATM terminal and of paying the selected goods and/or services through a secure network,
**characterised in that**
the purchaser concludes said transaction off line, by paying to said company the amount due for the above-said transaction within a certain period of time, in an ATM terminal with the option to pay Internet purchases operating on a secure network available for the bank system only, by using existing debit or credit cards as long as supplied with personal identification number (PIN), simply referred to as Bancomat, said paying including the steps of
- inserting the purchaser's Bancomat in said ATM terminal,
- selecting the option to pay Internet purchases,
- digiting on the ATM terminal keyboard said IP address and a univocal code,
- receiving on the display of said ATM, from said secure network's software, the amount of money to be paid and a request to confirm payment,
- confirming said payment,
whereby no transfer of any money sensitive information is made through a public network.

2. Process according to claim 1, **characterized by** including the following steps:
a) the purchaser selects, during an on-line connection with a merchant's web site of an e-commerce operating company, the goods or services of its own interest and the proper country code for the country he lives in.
b) the Purchaser indicates Bancomat as its selected payment instrument;
c) the purchaser receives from said company, a display communication including a univocal code relating to the purchasing operation, the amount of money involved, the deadline of the payment, the company's web IP address and an invitation to check said IP address, said communication not including any sensitive information;
d) said univocal code, said amount of money, a code related to the country where the purchaser lives and said web IP address are sent, through a secure private network (3), from the company to a data base operating in an intermediate position between the e-commerce trading companies and said secure network.

3. Process according to claim 2, **characterized by** including the following steps:
e) the purchaser selects the most convenient ATM terminal;
f) the purchaser inserts his card, selects the option to pay on-line purchases and digits on the ATM terminal keyboard the univocal code and the IP address already received from the e-commerce operating company ;
g) the purchaser receives on the display of said ATM terminal the amount of money to be paid and the request to confirm the payment;
h) the purchaser confirms the payment;
i) a purchaser's bank, connected with the ATM terminal, debits the purchaser's bank account, credits the proper amount of money on said company's bank account and sends to said intermediate data base the IP address of the company to whom the payment has been done, univocal code and amount of money paid, said data to be sent to the proper e-commerce operating company;
j) once received said data, the company starts fulfilment procedure for delivering goods or rendering services.

4. Process according to claim 2, **characterised in that** said display communication sent to the purchaser comprises one or more means selected in the group including on-line display, e-mail and SMS.

5. Process according to claim 2 **characterised in that** the flow of data between the intermediate data base and the company's web site, and vice versa, takes place after encryption of data through said private secure net (3).

6. Process according to claim 2, **characterised in that** said intermediate data base is managed by an organisation (IM) operating in an intermediate position between the e-commerce trading companies and said secure network and is fed by an IM's software running on e-commerce web's server with said univocal code, amount of money due, and country code of the Purchaser.

7. Process according to claim 2, **characterised in that** said secure network has its own data base and software and **in that** said secure network's software acquires in its data base said univocal code, amount of money due, and the IP address of the e-commerce company from said IM's data base through a private secure net (4).

8. Process according to claim 2, **characterised in that** said intermediate data base contains the IP address of the web site, the complete name and the complete bank account's code of said e-commerce operating companies.

9. Process according to claim 2, **characterised in that** a data base for each country is created in said intermediate data base.

10. Process according to claim 1, **characterised in that** said public network is the Internet network.

## Patentansprüche

1. Verfahren zum Durchführen von Online-Kauftransaktionen von Gütern und/oder Dienstleistungen, beinhaltend die Schritte des Verwendens eines mit einem öffentlichen Netzwerk verbundenen PC-Endgeräts zum Austauschen von Informationen und Daten mit einer Händler-Webseite eines elektronischen Handel betreibenden Unternehmens, zum Auswählen der Güter und/oder Dienstleistungen, die auf der Händler-Webseite zu kaufen sind, zum Empfangen, von dem Unternehmen, eines eindeutigen Codes, der sich auf die Kauftransaktionen bezieht, des betreffenden Geldbetrags sowie einer Einladung zur Verifizierung der IP-Adresse des Webseiten-Endgeräts für elektronischen Handel und Durchführung einer Zahlung innerhalb einer bestimmten Zeitspanne durch Verwenden eines Bancomats in einem Bankautomaten-Endgerät, und des Zahlens der ausgewählten Güter und/oder Dienstleistungen durch ein sicheres Netzwerk,
**dadurch gekennzeichnet, dass**
der Käufer die Transaktion offline, durch Zahlen des fälligen Betrags für die besagte Transaktion innerhalb einer bestimmten Zeitspanne an das Unternehmen, an einem Bankautomaten-Endgerät mit der Möglichkeit zum Zahlen von Internetkäufen abschließt, welches auf einem sicheren Netzwerk, welches nur für das Banksystem verfügbar Ist, betrieben wird, indem vorhandene Debit- oder Kreditkarten, soweit sie mit einer persönlichen Identifikationsnummer (PIN) versehen sind, der Einfachheit halber als Bancomat bezeichnet, verwendet werden, wobei das Bezahlen die folgenden Schritte umfasst:
- Einfügen des Bancomats des Käufers In das Bankautomaten-Endgerät,
- Auswählen der Option des Bezahlens von Internetkäufen,
- Eingeben der IP-Adresse und eines eindeutigen Codes auf der Tastatur des Bankautomaten-Endgeräts,
- Empfangen, von der Software des sicheren Netzwerks, auf der Anzeige des Bankautomaten des zu zahlenden Geldbetrags und einer Aufforderung, die Zahlung zu bestätigen,
- Bestätigen der Zahlung,
wodurch keine Übertragung von jeglichen sicherheitsempfindlichen Finanzinformationen durch ein öffentliches Netzwerk stattfindet.

2. Verfahren gemäß Anspruch 1, **dadurch gekennzeichnet, dass** es die folgenden Schritte enthält:
a) der Käufer wählt während einer Online-Verbindung mit der Händler-Webeseite eines elektronischen Handel betreibenden Unternehmens die ihn interessierenden Güter oder Dienstleistungen sowie den richtigen Ländercode für das Land, in dem er lebt, aus;
b) der Käufer gibt Bancomat als sein gewähltes Zahlungsinstrument an;
c) der Käufer empfängt von dem Unternehmen eine Anzeigekommunikation einschließlich eines eindeutigen Codes, der sich auf den Kaufvorgang bezieht, des betreffenden Geldbetrags, der Zahlungsendfrist, der IP-Adresse des Unternehmens-Webs und einer Einladung, die IP-Adresse zu überprüfen, wobei die Kommunikation keinerlei sicherheitsempfindliche Informationen enthält;
d) der eindeutige Code, der Geldbetrag, ein auf das Land, in dem der Käufer lebt, bezogener Code und die Web-IP-Adresse werden von dem Unternehmen durch ein sicheres privates Netzwerk (3) an eine Datenbank geschickt, die In einer zwischengelagerten Position zwischen den elektronischen Handel durchführenden Unternehmen und dem sicheren Netzwerk betriebenen wird.

3. Verfahren gemäß Anspruch 2, **dadurch gekennzeichnet, dass** es die folgenden Schritte enthält:
e) der Käufer wählt das bequemste Bankautomat-Endgerät;
f) der Käufer führt seine Karte ein, wählt die Möglichkeit, Onlinekäufe zu bezahlen, und gibt auf der Tastatur des Bankautomaten-Endgeräts den eindeutigen Code und die IP-Adresse, welche bereits von dem elektronischen Handel betreibenden Unternehmen empfangen wurden, ein;
g) der Käufer empfängt auf der Anzeige des Bankautomaten-Endgeräts den zu zahlenden Geldbetrag und die Aufforderung, die Zahlung zu bestätigen;
h) der Käufer bestätigt die Zahlung;
i) eine Bank des Käufers, die mit dem Bankautomaten-Endgerät verbunden ist, bucht von dem Bankkonto des Käufers ab, schreibt den richtigen Geldbetrag dem Bankkonto des Unternehmens gut und sendet zur zwischengelagerten Datenbank die IP-Adresse des Unternehmens, dem die Zahlung zugeführt wurde, den eindeutigen Code und den bezahlten Betrag, wobei die Daten zum richtigen, elektronischen Handel betreibenden Unternehmen zu senden sind;
j) wenn die Daten empfangen wurden, startet das Unternehmen die Erfüllungsprozedur zur Lieferung von Waren oder zum Leisten von Dienstleistungen.

4. Verfahren gemäß Anspruch 2, **dadurch gekennzeichnet, dass** die zum Käufer gesendete Anzeigekommunikation eine oder mehrere Mittel umfasst, die aus der Gruppe ausgewählt sind, die eine Online-Anzeige, eine E-Mail und eine SMS enthält.

5. Verfahren gemäß Anspruch 2, **dadurch gekennzeichnet, dass** der Datenfluss zwischen der zwischengelagerten Datenbank und der Webseite des Unternehmens, und in der umgekehrten Richtung, nach einer Datenverschlüsselung durch das private sichere Netz (3) stattfindet.

6. Verfahren gemäß Anspruch 2, **dadurch gekennzeichnet, dass** die zwischengelagerte Datenbank durch eine Organisation (IM) gemanagt wird, die in einer zwischengelagerten Position zwischen den elektronischen Handel durchführenden Unternehmen und dem sicheren Netzwerk operiert, und durch eine auf einem Webserver für elektronischen Handel laufende IM-Software mit dem eindeutigen Code, dem fälligen Geldbetrag und dem Ländercode des Käufers beliefert wird.

7. Verfahren gemäß Anspruch 2, **dadurch gekennzeichnet, dass** das sichere Netzwerk seine eigene Datenbank und Software aufweist, und dass die Software des sicheren Netzwerks in seiner Datenbank den eindeutigen Code, den fälligen Geldbetrag und die IP-Adresse des elektronischen Handelsunternehmens von der IM-Datenbank durch ein privates sicheres Netz (4) erlangt.

8. Verfahren gemäß Anspruch 2, **dadurch gekennzeichnet, dass** die zwischengelagerte Datenbank die IP-Adresse der Webseite, den vollständigen Namen und den vollständigen Bankkonto-Code der elektronischen Handel betreibenden Unternehmen enthält.

9. Verfahren gemäß Anspruch 2, **dadurch gekennzeichnet, dass** in der zwischengelagerten Datenbank für jedes Land eine Datenbank erzeugt wird.

10. Verfahren gemäß Anspruch 1, **dadurch gekennzeichnet, dass** das öffentliche Netzwerk das Internet-Netzwerk ist.

## Revendications

1. Procédé pour effectuer des transactions d'achat en ligne de produits et/ou de services, comprenant les étapes suivantes :
- utilisation d'un terminal d'ordinateur personnel connecté à un réseau public pour échanger des informations et des données avec un site commercial internet d'une société pratiquant le commerce en ligne,
- sélection des produits et/ou services à acheter sur ce site commercial internet,
- réception de cette société d'un code univoque relatif à cette transaction d'achat, au montant concerné, ainsi qu'une invitation à vérifier l'adresse IP du site internet du commerce en ligne et d'effectuer le paiement dans un certain délai en utilisant Bancomat dans un terminal ATM et en payant les produits et/ou les services choisis par l'intermédiaire d'un réseau sécurisé,
**caractérisé en ce que**
l'acheteur conclut cette transaction en différé en payant à cette société le montant dû pour cette transaction dans un certain délai, dans un terminal ATM comprenant l'option : paiement d'achats en ligne, fonctionnant sur un réseau sécurisé disponible uniquement pour le système bancaire, en utilisant des cartes de débit ou de crédit existantes à condition qu'elles portent un numéro d'identification personnel (PIN), couramment appelé Bancomat, ce paiement comprenant les étapes suivantes :
- insertion du Bancomat de l'acheteur dans ce terminal ATM,
- sélection de l'option : paiement d'achats en ligne,
- frappe sur le clavier du terminal ATM de l'adresse IP et d'un code univoque,
- réception sur l'écran de l'ATM, en provenance du logiciel du réseau sécurisé, du montant à payer et d'une requête en confirmation de paiement,
- confirmation du paiement, aucun transfert d'information confidentielle relative au paiement n'étant effectué par l'intermédiaire d'un réseau public.

2. Procédé selon la revendication 1, **caractérisé en ce qu'**il comprend les étapes suivantes:
a) l'acheteur sélectionne, durant une connexion en ligne avec un site commercial Internet d'une société pratiquant le commerce en ligne, les produits ou services qui l'intéressent et le code pays approprié pour le pays dans lequel il est domicilié ;
b) l'acheteur indique qu'il sélectionne Bancomat comme moyen de paiement ;
c) l'acheteur reçoit de cette société une communication sur son écran comprenant un code univoque relatif à l'opération d'achat, le montant concerné, l'échéance de paiement, l'adresse internet IP de la société et une invitation à contrôler cette adresse IP, cette communication ne comprenant aucune information confidentielle ;
d) ce code univoque, ce montant, un code relatif au pays où l'acheteur est domicilié et cette adresse internet IP sont envoyés par l'intermédiaire d'un réseau sécurisé privé (3) de la société vers une base de données opérant dans une position intermédiaire entre les sociétés pratiquant le commerce en ligne et ce réseau sécurisé.

3. Procédé selon la revendication 2, **caractérisé en ce qu'**il comprend les étapes suivantes :
e) l'acheteur sélectionne le terminal ATM le plus pratique :
f) l'acheteur insère sa carte, sélectionne l'option : paiement d'achats en ligne et tape sur le claver du terminal ATM le code univoque et l'adresse IP déjà reçue de la société pratiquant le commerce en ligne ;
g) l'acheteur reçoit sur l'écran de ce terminal ATM l'indication du montant à payer et la demande de confirmer le paiement ;
h) l'acheteur confirme le paiement
i) la banque de l'acheteur, connectée au terminal ATM, débite le compte bancaire de l'acheteur, crédite le compte bancaire de la société du montant adéquat et envoie à la base intermédiaire de données l'adresse IP de la société au profit de laquelle le paiement a été effectué, le code univoque et le montant payé, ces données étant à transmettre à la société pratiquant le commerce en ligne concernée ;
j) une fois ces données reçues, la société commence à mettre en oeuvre la procédure de livraison des produits ou d'exécution des services.

4. Procédé selon la revendication 2, **caractérisé en ce que** cette communication par écran envoyée à l'acheteur comprend un ou plusieurs moyens sélectionnés dans le groupe comprenant l'affichage en ligne, le courrier électronique et les SMS.

5. Procédé selon la revendication 2, **caractérisé en ce que** le flux de données entre la base intermédiaire de données et le site Internet de la société, et vice et versa, intervient après codage de données par l'intermédiaire de ce réseau privé sécurisé (3).

6. Procédé selon la revendication 2, **caractérisé en ce que** cette base de données intermédiaire est contrôlée par une organisation (IM) intervenant dans une position intermédiaire entre les sociétés prati quant le commerce en ligne et ce réseau sécurisé, et reçoit par l'intermédiaire d'un logiciel 1M tournant sur le serveur du réseau du commerce en ligne le code univoque, le montant dû et le code pays de l'acheteur.

7. Procédé selon la revendication 2, **caractérisé en ce que** ce réseau sécurisé possède sa propre base de données et son propre logiciel, et **en ce que** le logiciel de ce réseau sécurisé reçoit dans sa base de données ce code univoque, le montant dû et l'adresse IP de la société de commerce en ligne par l'intermédiaire d'un réseau privé sécurisé (4).

8. Procédé selon la revendication 2, **caractérisé en ce que** cette base intermédiaire de données contient l'adresse IP du site internet, le nom complet et le code complet du compte bancaire de ces sociétés pratiquant le commerce en ligne.

9. Procédé selon la revendication 2, **caractérisé en ce qu'**une base de données pour chaque pays est créée dans cette base intermédiaire de données.

10. Procédé selon la revendication 1, **caractérisé en ce que** ce réseau public est le réseau internet.
